# EUROPEAN PATENT APPLICATION

(11) **EP 1 310 531 A1**
(43) Date of publication of application: **14.05.2003**
(21) Application number: 02257671.4
(22) Date of filing: 06.11.2002
(51) Int. Cl.: C09D 5/44, C09D 5/14, A01N 43/80

(54) **Antibacterial lead-free cationic electrodeposition coating composition**

(30) Priority: 07.11.2001 JP 2001342022
(71) Applicant: Nippon Paint Co., Ltd., Osaka-shi Osaka-fu (JP)
(72) Inventor: Takegawa, Masahiro, Nara-shi, Nara-ken (JP); Yamada, Mitsuo, Suita-shi, Osaka-fu (JP); Muramatsu, Kosuke, Tokyo-to (JP); Murakami, Ryoichi, Tokyo-to (JP)
(74) Representative: Perry, Robert Edward

(57) **Abstract**

The present invention provides an antibacterial lead-free cationic electrodeposition coating composition comprising an aqueous medium, a binder resin including a cationic epoxy resin and a blocked isocyanate curing agent which is dispersed or dissolved in the aqueous medium, a neutralizing acid for neutralizing the cationic epoxy resin, an organic solvent and an antibacterial agent, wherein a volatile organic content is not more than 2% by weight, and the antibacterial agent is an isothiazolone compound. The antibacterial lead-free cationic electrodeposition coating composition of the present invention has reduced VOC and lead ion content in order to exert small influence on the environment, whereas having antibacterial ability comparable to that before reducing VOC and lead ion content, and having excellent electrodeposition performance.

## Description

### BACKGROUND OF THE INVENTION

### Field of the Invention

The present invention relates to an antibacterial lead-free cationic electrodeposition coating composition, and in particular, to an antibacterial lead-free cationic electrodeposition coating composition having low volatile organic content (VOC).

### Description of the Prior Art

Conventionally, for the purpose of improving corrosion resistance of a coated film, lead has been added to electrodeposition coating compositions. Also as a solvent for synthesizing a resin, as a flow auxiliary agent of electrodeposition coated film or as an agent for controlling coating workability, the conventional electrodeposition coating compositions include organic solvents.

In recent years, however, due to the fact that lead ions exert adverse effect on the environments, it is requested to reduce the amount of lead used for electrodeposition coating compositions. Also, as awareness of environmental problems rises, industrialized countries have shifted to imposing regulations for amounts of harmful aerial pollutants (HAPs). Therefore, once environmental regulatory standards are tightened, it may become difficult to use the conventional electrodeposition coating compositions.

Under these circumstances, an attempt is requested for reducing amounts of lead ions and organic solvents included in electrodeposition coating compositions as components thereof while keeping the level of electrodeposition performance. For example, lead ions and organic solvents have antibacterial activity of preventing bacteria from breeding in the coating compositions. Accordingly, conventional electrodeposition coating compositions have antibacterial ability, and hence improvement of this ability was not essentially required.

However, when the contents of lead ions and organic solvents in an electrodeposition coating composition are reduced, antibacterial ability of the coating composition itself deteriorates, and a problem of that bacteria can easily breed was caused. The electrodeposition coating compositions are by nature in a condition that bacteria are easy to breed since they are in aqueous system and circulated in a closed system containing biodegradable acid while being heated to 25 to 35 ° C.

As bacteria breed in an electrodeposition coating composition, the coating composition deteriorates, aggregation of solid components of the coating composition, defect of deposited coated film, leveling defect and the like occur. Therefore, in reducing the amounts of lead ions and organic solvents in an electrodeposition coating composition, it is necessary to compensate antibacterial ability that has been deteriorated due to reduction of these components. However, the electrodeposition coating composition after compensation of antibacterial ability should not be deteriorated in electrodeposition performance as compared to that of the electrodeposition coating composition before compensation.

In an aqueous coating composition of emulsion type, for the purpose of preventing the coating composition from deteriorating in quality due to proliferation of bacteria, various kinds of antibacterial additives have been conventionally added to such a coating composition. Examples of such additives include organic solvents having antibacterial activity such as ethylene glycol monobutyl ether, ethylene glycol monoethyl ether, ethylene glycol, methanol and ethanol; antibacterial agents such as formaldehyde and hydrogen peroxide; and ionic compounds such as silver nitrate and salicylic acid.

However, among these conventional antibacterial substances, hydrophilic organic solvents are inappropriate in order to achieve reduced content of solvent in an electrodeposition coating composition. Also, antibacterial agents that have been used heretofore in aqueous coating compositions must be included in large amounts, such as 50 ppm or more, and if they are directly employed for an electrodeposition coating composition, electrodeposition performance of the coating composition maybe affected, for example, appearance of coated film deteriorates. Hence they are not appropriate. In addition, ionic compounds are also inappropriate since they alter conductivity of the coating composition and hence the pinhole generation property, the throwing power and the like maybe affected.

Japanese Patent Published Publication No. 2001-501990 discloses an electrodeposition coating composition including silver ion and atomic silver as biocidal agents. This also discloses an effect of such antibacterial agents, which improves antibacterial ability to prevent bacterial damage.

However, the above metal ions remain in a coated film in concentrated form even after electrodeposition coating is conducted, and they may exert adverse effect on the environment. Therefore it is preferred to use these metal ions as little as possible. Also, such metal ions alter conductivity of the electrodeposition coating composition, and they may exert adverse effect on the pinhole generation property, the throwing power and the like. In the above publication, there is no description about necessity of reducing solvents and metal ions of electrodeposition coating compositions, about deterioration of antibacterial ability as a result of the reduction, nor about necessity of compensating the deteriorated antibacterial ability

### SUMMARY OF THE INVENTION

The present invention provides an antibacterial lead-free cationic electrodeposition coating composition comprising an aqueous medium, a binder resin including a cationic epoxy resin and a blocked isocyanate curing agent which is dispersed or dissolved in the aqueous medium, a neutralizing acid for neutralizing the cationic epoxy resin, an organic solvent and an antibacterial agent, wherein a volatile organic content is not more than 2% by weight, and the antibacterial agent is an isothiazolone compound.

The antibacterial lead-free cationic electrodeposition coating composition of the present invention has reduced VOC and lead ion content in order to exert small influence on the environment, whereas having antibacterial ability comparable to that before reducing VOC and lead ion content, and having excellent electrodeposition performance.

Herein, the wording "lead-free" means that substantially no lead is contained, or lead is not contained in such an amount that excerts adverse effect on the environment. Specifically, it means that lead is not contained in such an amount that content of lead compound in an electrodeposition bath dose not exceed 50 ppm, preferably 20 ppm.

### DETAILED DESCRIPTION OF THE PREFERRED EMBODIMENT

A cationic electrodeposition coating composition contains an aqueous medium, a binder resin dispersed or dissolved in the aqueous medium and a variety of additives such as neutralizing acid, an organic solvent and the like. The binder resin includes a cationic resin having a functional group and a blocked isocyanate curing agent for curing the cationic resin. As the aqueous medium, ion-exchanged water or the like is generally used.

In the electrodeposition coating composition according to the present invention, it is preferred to use, as the cationic resin, a cationic epoxy resin obtained by allowing an active hydrogen compound such as amine to react with the epoxy ring of an epoxy resin thereby opening the epoxy ring to introduce a cationic group, and to use, as the blocked isocyanate curing agent, blocked polyisocyanate in which the isocyanate group in polyisocyanate is blocked.

### Cationic epoxy resin

The cationic epoxy resin used in the present invention includes epoxy resins that are modified with amines. This cationic epoxy resin may be resins known to the art as disclosed in Japanese Patent Laid-open Publication Nos. S54(1979)-4978 and S56(1981)-34186 and so on.

The cationic epoxy resin is typically produced by opening all of the epoxy rings of a bisphenol type epoxy resin with an active hydrogen compound capable of introducing cationic groups, or opening part of the epoxy rings with the other active hydrogen compounds followed by opening the remaining epoxy rings with an active hydrogen compound capable of introducing cationic groups.

Typical examples of the bisphenol type epoxy resin are bisphenol A or bisphenol F type epoxy resins. Examples of commercially available products of the former include EPICOAT 828 (Yuka Shell Epoxy K.K.; epoxy equivalent 180-190), EPICOAT 1001 (Yuka Shell Epoxy K.K.; epoxy equivalent 450-500), EPICOAT 1010 (Yuka Shell Epoxy K.K.; epoxy equivalent 3000-4000) and so forth, and examples of commercially available products of the latter include EPICOAT 807 (Yuka Shell Epoxy K.K.; epoxy equivalent 170).

As the cationic epoxy resin, epoxy resins containing oxazolidone ring as shown in the formula of the paragraph [0004], chemical formula 3 of Japanese Patent Laid-open Publication No. H5(1993)-306327 may be used. This provides a coated film which is superior in heat resistance and corrosion resistance.

For introducing an oxazolidone ring into an epoxy resin, for example, a blocked polyisocyanate blocked with a lower alcohol such as methanol and polyepoxide are heated and kept warm in the presence of a basic catalyst, and the lower alcohol which is a by-product is distilled off, whereby an oxazolidone ring containing epoxy resin can be obtained.

Particularly preferred epoxy resin is the epoxy resins having an oxazolidone ring. This is because these epoxy resins can provide a coated film having excellent heat resistance and corrosion resistance, as well as having excellent impact resistance.

It is known by a person skilled in the art that by reaction of a bifunctional epoxy resin and a diisocyanate blocked with a monoalcohol (i.e., bis-urethane), the epoxy resin having an oxazolidone ring is produced. Specific examples of these epoxy resins containing an oxazolidone ring and production methods thereof are described, for example, in the paragraphs from "0012" to "0047" of Japanese Patent Laid-open Publication No. 2000-128959.

These epoxy resins may be modified with appropriate resins such as polyester polyols, polyether polyols, and monofunctional alkylphenols. Also, chain length of the epoxy resin may be elongated by utilizing the reaction between epoxy groups and diols or dicarboxylic acids.

These epoxy resins are preferably ring-opened by an active hydrogen compound so that the amine equivalent is from 0.3 to 4.0 meq/g, and more preferably from 5 to 50% of this amine equivalent is occupied by primary amino groups after ring-opening.

As the active hydrogen compound capable of introducing cationic groups, primary amines, secondary amines and acid salts of tertiary amines, sulfides and acid mixtures can be exemplified. For preparing the epoxy resin containing a primary, secondary or tertiary amino group according to the present invention, primary amines, secondary amines, and acid salts of tertiary amines are used as the active hydrogen compound capable of introducing a cationic group.

Specific examples of the above include butylamine, octylamine, diethylamine, dibutylamine, methylbuthylamine, monoethanolamine, diethanolamine, N-methylethanolamine, triethylamine hydrochloride, N,N-dimethylethanolamine acetate, diethyldisulfide/acetic acid mixture and the like, as well as secondary amines obtained by blocking primary amines such as ketimine of aminoethylethanolamine and diketimine of diethylenetriamine. A plurality of these amines may be used in combination.

### Blocked isocyanate curing agent

Polyisocyanate used for the blocked isocyanate curing agent refer to compounds having two or more isocyanate groups in one molecule. As the polyisocyanate, any of aliphatic, alicyclic, aromatic and aromatic-aliphatic isocyanate compounds are available.

Specific examples of the polyisocyanate include aromatic diisocyanates such as tolylene diisocyanatc (TDI), diphenylmethane diisocyanate (MDI), p-phenylene diisocyanate and naphthalene diisocyanate; aliphatic diisocyanates having 3 to 12 carbon atoms such as hexamethylene diisocyanate (HDI), 2,2,4-trimetylhexane diisocyanate and lysine diisocyanate; alicyclic diisocyanates having 5 to 18 carbon atoms such as 1,4-cyclohexane diisocyanate (CDI), isophorone diisocyanates (IPDI), 4,4'-dicyclohexylmethane diisocyanate (hydrogenated MDI), methylcyclohexane diisocyanate, isopropyridene dicyclohexyl-4,4'-diisocyanate and 1,3-diisocyan atom ethylcyclohexane (hydrogenated XDI), hydrogenated TDI, 2,5-or 2,6-bis(isocyanate methyl)-bicyclo [2.2.1] heptane (also referred to as norbornane diisocyanate); aliphatic diisocyanates having an aromatic ring such as xylylene diisocyanate (XDI) and tetramethyl xylylene diisocyanate (TMXDI); modified compounds of these diisocyanates (urethanated compounds, carbodiimids, urethodiones, urethoimines, burette and/or isocyanurate modified compounds) and so forth. These may be used solely or in combination of two or more kinds.

Adducts or prepolymers obtained by reacting polyisocyanate with polyols such as ethylene glycol, propylene glycol, trimethyrol propane, hexane triol and the like so that NCO/OH ratio is 2 or more are also available for the blocked isocyanate curing agent.

"Blocking agent" used herein refers to a compound that adds to an isocyanate group and is capable of blocking it at an ambient temperature, but regenerating the free isocyanate group when heated to a temperature higher than the dissociation temperature.

As the blocking agent, those commonly used such as e-caprolactam and ethylene glycol monobutyl ether and the like can be used. However, among these, many volatile blocking agents are found in a list of restricted HAPs (harmful air pollutants), and hence it is preferred to use them in the least possible amount.

### Pigment

Electrodeposition coating composition generally contains a pigment as a coloring agent. Also the electrodeposition coating composition according to the present invention may contain pigments which are usually used. Examples of such pigments include coloring pigments such as titanium white, carbon black and red iron oxide; extender pigments such as kaolin, talc, aluminum silicate, calcium carbonate, mica, clay and silica; rust preventive pigments such as zinc phosphate, iron phosphate, aluminum phosphate, calcium phosphate, zinc phosphite, zinc cyanide, zinc oxide, aluminum tripolyphosphate, zinc molybdate, aluminum molybdate, calcium molybdate, aluminum phosphomolybdate, aluminum zinc phosphomolybdate and the like.

In order to impart corrosion resistance to a coated film, rust preventive pigments and extender pigments may be contained, provided that the amounts of the pigments are such that the weight ratio (P/V) of pigment to resin solid contained in the coating composition is in the range of 1/80 to 1/1. If the weight ratio of pigment to resin solid in the coating composition exceeds 1/1, deposition ability of the solid content of the coating composition deteriorates, resulting in deterioration of throwing power. Whereas if the ratio is less than 1/80, there is a fear that sufficient corrosion resistance cannot be obtained.

### Pigment dispersed paste

When a pigment is used as a component of an electrodeposition coating composition, the pigment is generally dispersed in an aqueous medium in high concentration to render it a paste state. This attributes the fact that pigments are usually in powder state, and it is difficult to uniformly disperse pigments in such a low concentration used in the electrodeposition coating composition, by way of a single process. Generally, a paste like this is referred to as a pigment dispersed paste.

A pigment dispersed paste is prepared by dispersing a pigment in an aqueous medium together with a pigment dispersing resin. As the pigment dispersing resin, cationic or nonionic surfactants of low molecular weight, cationic polymers such as modified epoxy resins having a quaternary ammonium group and/or a tertiary sulfonium group or the like are generally used. As the aqueous medium, ion-exchanged water, water containing a small amount of alcohols and the like are used. Generally, a ratio by solid of 5 to 40 parts by weight (as solid) of the pigment dispersed resin to 20 to 50 parts by weight (as solid) of the pigment, is used.

### Antibacterial agent

The electrodeposition coating composition according to the present invention contains an antibacterial agent. This intends to improve antibacterial ability of the electrodeposition coating composition thereby preventing microorganisms such as bacteria from breeding in the coating composition. This antibacterial agent should be able to compensate the impaired antibacterial ability due to reduction of amounts of lead ions and organic solvents in the electrodeposition coating composition, when contained in such a small amount that does not exert influence on electrodeposition performance such as coating voltage, coulomb efficiency, coating resistance, coating appearance and storage stability.

Preferred compounds for used as the antibacterial agent are isothiazolone compounds. Among isothiazolone compounds, particularly preferred are:
chloromethylisothiazolone represented by the formula: 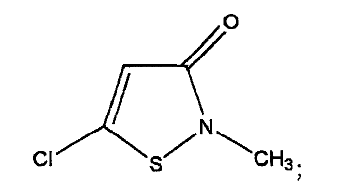
methylisothiazolone represented by the formula: 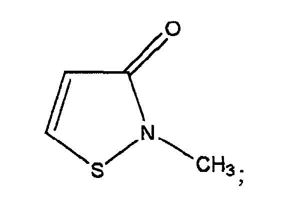
octylisothiazolone represented by the formula: 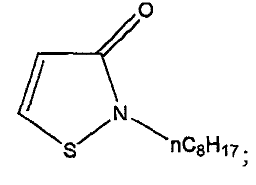 and
mixtures of two or more kinds of these compounds.

### Electrodeposition coating composition

The electrodeposition coating composition according to the present invention is prepared by dispersing the aforementioned binder resin including a cationic epoxy resin and a blocked isocyanate curing agent, pigment dispersed paste and antibacterial agent in an aqueous medium. Also for neutralizing the cationic epoxy resin and improving dispersibility of the binder resin emulsion, the aqueous medium usually contains a neutralizing acid. The neutralizing acid is inorganic acids or organic acids such as hydrochloric acid, nitric acid, phosphoric acid, formic acid, acetic acid and lactic acid.

More specifically, the amount of the neutralizing acid is from 10 to 30 mg equivalent, preferably from 15 to 25 mg equivalent, relative to 100 g of resin solid of binder resin including a cationic epoxy resin and a blocked isocyanate curing agent. If the amount of the neutralizing acid is less than 10 mg equivalent, affinity to the water is insufficient so that dispersion in the water is impossible or extremely unstable. Whereas if it is more than 30 mg equivalent, quantity of electricity required for deposition increases and deposition ability of the solid content deteriorates, as a result throwing power becomes poor.

In the present description, amount of the neutralizing acid is represented by a value of mg equivalent, relative to 100 g of resin solid of binder resin contained in the coating composition, and represented by MEQ (A).

The amount of the blocked isocyanate curing agent should be enough to react with active hydrogen containing functional groups such as primary, secondary amino groups and hydroxyl group in the cationic epoxy resin at the time of curing, thereby providing an excellent cured coated film. It is in the range of generally 50/50 to 90/10, preferably 65/35 to 80/20 when represented by weight ratio of solid content of the cationic epoxy resin, relative to the blocked isocyanate curing agent.

The coating composition may include tin compounds such as dibutyl tin dilaurylate and dibutyl tin oxide, and usual urethane cleavage catalysts. Since the coating composition does not substantially include lead, the addition amount of the tin compounds is preferably in the range of 0.1 to 5% by weight of resin solid.

Organic solvents are inevitably necessary as a solvent in synthesizing resin components such as a cationic epoxy resin, a blocked isocyanate curing agent and a pigment dispersing resin and the like, and for completely removing these organic solvents, complicated operations are required. Moreover, if organic solvents are contained in a binder resin, fluidity of a coated film at the time of forming the film is promoted, and smoothness of the coated film improves.

As organic solvents which are usually included in the coating composition, ethylene glycol monobutyl ether, ethylene glycol monohexyl ether, ethylene glycol mono-2-ethylhexyl ether, propylene glycol monobutyl ether, dipropylene glycol monobutyl ether, propylene glycol monophenyl ether and the like are exemplified.

Therefore, conventionally, these organic solvents are not completely removed from the resin component or the other organic solvents are further added for raising VOC of the electrodeposition coating composition to some extent, and the content is adjusted to about 1 to 5% by weight. In this context, the volatile organic component represented by "VOC (content of volatile organic component)" refers to organic solvents having a boiling point of not more than 250°C, and examples of which include those specificly recited above.

To the contrary, in the electrodeposition coating composition according to the present invention, it is preferred that content of the organic solvent is reduced as compared to the conventional ectrodeposition coating composition. This is in order to prevent exerting adverse effect on the environments. More specifically, VOC of the coating composition should be not more than 2% by weight, preferably in the range of 0.1 to 1.0% by weight, and more preferably in the range of 0.2 to 0.5% by weight. If VOC of the coating composition is more than 2% by weight, influence exerted on the environment becomes large and throwing power of the coating composition decreases because a resistance value of the coated film falls due to fluidity improvement of the deposited coated film.

Examples of a method for controlling the VOC to 2% by weight or less are as follows. The organic solvents which are used for regulating viscosity at the time of reaction can be reduced by conducting the reaction with a small amount of solvents or without solvents at elevated temperatures. The organic solvents which are inevitably necessary at the time of reaction can be reduced, for example, by using low boiling point solvents. In that case, the content of volatile organic components in the final product can be reduced by recovering the solvents at a desolvating step. The organic solvents which are used in regulating viscosity at the time of coating can be reduced, for example, by modifying the resin with soft segment to reduce its viscosity.

VOC value can be determined by conducting gas chromatography measurement based on the internal standard method, and measuring an amount of VOC component which is contained as an organic solvent.

The isothiazolone compounds as an antibacterial agent may be included in the electrodeposition coating composition of the present invention in such an amount that the concentration thereof in an electrodeposition bath is 2 to 100 ppm, preferably 5 to 40 ppm. If the concentration of the isothiazolone compounds in the electrodeposition bath is less than 2 ppm, antibacterial ability of the electrodeposition coating composition is insufficient, whereas if the concentration is more than 100 ppm, corrosion resistance of the resulting coated film may deteriorate.

The isothiazolone compounds may be added to a pigment dispersed paste (F-1) in a concentration suitable for an electrodeposition coating composition. They may be added to a binder resin emulsion (F-2) prior to be mixed with a pigment component, thereafter the coating composition be prepared. Alternatively, they may be added to the electrodeposition coating composition after dilution.

In addition to the above components, the coating composition may include conventionally used additives for coating compositions such as plasticizers, surfactants, antioxidants and ultraviolet absorbers.

The electrodeposition coating composition of the present invention is electrodeposited on an object to be coated in a manner well-known by a person skilled in the art, to form an electrodeposition coated film (uncured). The object to be coated is not particularly limited insofar as it has conductivity, and examples of which include iron sheets, steel sheets and aluminum sheets, as well as those obtainable by surface treatment of the same, and molded products of the same.

It is preferred that the electrodeposition coated film has a film thickness of 10 to 20 µm. If the film thickness is less than 10 µm, the antirust property is insufficient, and if it is more than 20 µm, the coating composition will be wasted. After completion of an electrodeposition step, the coated film thus obtained is cured by baking at 120 to 260 ° C, preferably 160 to 220 °C for 10 to 30 minutes with or without washing.

### EXAMPLES

The following Examples further illustrate the present invention in detail but are not to be construed to limit the scope thereof. All parts and percents therein are by weight unless otherwise indicated.

### Production example 1

### Production of amine modified epoxy resin

To a flask equipped with a stirrer, a cooler, a nitrogen introducing tube and a dropping funnel, 71.34 g of 2,4/2,6-tlylene diisocyanate (80/20 wt%), 111.98 g of methylisobutylketone, and 0.02 g of dibutyl tin dilaurate were weighed, and 14.24 g of methanol was added dropwise by means of a dropping funnel over 30 minutes under stirring and nitrogen bubbling. The temperature rose to 60 ° C from the room temperature due to exothermic heat. After continuing the reaction for 30 minutes, 46.98 g of ethylene glycol mono-2-ethylhexyl ether was added dropwise by means of a dropping funnel over 30 minutes. The temperature rose to 70 ° C to 75 ° C due to exothermic heat. After continuing the reaction for 30 minutes, 41.25 g of bisphenol A propylene oxide (5 mol) adduct (BP-5P available from Sanyo Chemical Industries K.K.) was added, the temperature was raised to 90 ° C and the reaction was continued until the NCO groups disappear while measuring IR spectrum.

Next, 475.0 g of a bisphenol A-type epoxy resin (YD-7011R available from Tohto Kasei K.K.) was added and uniformly dissolved. Then the temperature was raised from 130°C to 142°C, and water was removed from the reaction system by azeotropy with MIBK. After cooling to 125°C, 1.107 g of benzyldimetylamine was added and oxazolidone ring forming reaction was conducted by the methanol removing reaction. The reaction was continued until the epoxy equivalent became 1140.

Thereafter, the reaction mixture was cooled to 100 ° C, 24.56 g of N-methylethanolamine, 11.46 g of diethanolamine and 26.08 g of aminoethylethanolamine ketimine (78.8% methylisobutyl ketone solution) were added, and allowed to react for 2 hours at 110°C. Thereafter, 20.74 g of ethylene glycol mono-2-ethylhexyl ether and 12.85 g of methylisobutyl ketone were added and diluted for regulating the nonvolatile content to 82%. Number average molecular weight (GPC method) was 1380, and amine equivalent was 94.5 mcq/100g.

### production example 2

### Production of blocked isocyanate curing agent

To a flask equipped with a stirrer, a cooler, a nitrogen introducing tube, a thermometer and a dropping funnel, 199 g of hexamethylene diisocyanate trimer (CORONATE HX; available from Nippon Polyurethane K.K.), 32 g of methylisobutyl ketone, and 0.03 g of dibutyl tin dilaurate were weighed, and 87.0 g of metylethylketooxime was added dropwise by means of a dropping funnel over 1 hour under stirring and nitrogen bubbling. The temperature was raised from the initial temperature of 50 ° C to 70 °C. The reaction was continued for another 1 hour, and allowed to react until absorption of the NCO group measured by an infrared spectrometer disappears. Thereafter, 0.74 g of n-butanol and 39.93 g of methylisobutyl ketone were added to adjust the nonvolatile content to 80%.

### Production example 3

### Production of pigment dispersed paste

To a flask equipped with a stirrer, a cooler, a nitrogen introducing tube, a thermometer and a dropping funnel, 382.20 g of a bisphenol A-type epoxy resin having an epoxy equivalent of 188 (Trade name DER-331J) and 111.98 g of bisphenol A were weighed, the temperature was raised to 80 ° C and the contents were uniformly dissolved. Thereafter, 1.53 g of 1% solution of 2-ethyl-4-methyl-methylimidazole was added and allowed to react for 2 hours at 170 ° C. After cooling to 140 ° C, 196.50 g of 2-ethylhexanol half blocked isophorone diisocyanate (nonvolatile content 90%) was added and allowed to react until the NCO group disappears. To this was added 205.00 g of dipropylene glycol monobutyl ether, 408.00 g of 1-(2-hydroxyethylthio)-2-propanol, 134.00 g of dimethylol propionic acid and 144.0 g of ion-exchanged water, and this was allowed to react at 70°C. The reaction was continued until the acid value decreased to 5 or less. The obtained resin was diluted with 1150.50 g of ion-exchanged water so that the nonvolatile content was 35%.

A sand grind mill was charged with 120 parts of the pigment dispersing resin obtained in the above, 2.0 parts of carbon black, 100.0 parts of kaolin, 80.0 parts of titanium dioxide, 18.0 parts of aluminum phosphomolybdate and 184 parts of ion-exchanged water, and this was dispersed until the particle size was 10 µm or less to give a pigment dispersed paste (solid content 48%).

### Example 1

### Production of cationic electrodeposition coating composition

145.11 g of ion-exchanged water and 5.04 g of acetic acid were weighed. To this, a mixture of 320.11 g (75.0 g as solid) of amine modified epoxy resin of Production example 1 that had been heated to 70°C and 190.38 g (25.0 g as solid) of blocked isocyanate curing agent of Production example 2 was gradually added dropwise and uniformly dispersed by stirring. Thereafter, ion-exchanged water was added so that the solid content was 36%.

Next, to this emulsion was added 0.02 g of 50% aqueous solution of methylisothiazolone (MIT) was added. Then 201.61 g (nonvolatile content 48%) of the pigment dispersed paste obtained in Production example 3 was added for coloring and 2.0 g of ethylene glycol monohexyl ether, followed by deionized water was added, to obtain an electrodeposition coating composition having a nonvolatile content of 20%. In this coating composition, VOC was 0.5%, and MIT concentration was 5 ppm.

The electrodeposition coating composition thus obtained was tested for stability over time and antibacterial ability. The electrodeposition coating composition was put into an electrodeposition bath, incubated at 30 ° C and left to stand under stirring. At 3, 7 and 14 days from the beginning of the standing, solid content (NV%), pH, conductivity (cond) and amount of neutralizing acid (MEQ(A)) were measured. Proliferation of bacteria is indirectly shown by decreasing of neutralizing acid among these characteristic values.

In parallel with this, a steel sheet having been treated with zinc phosphate was immersed in this coating composition as an object to be coated, and the object was electrodeposited for 3 minutes at different coating voltages (V) of 150, 200 and 250, respectively. For determining electrodeposition performances, thickness of coated film (µm), coulomb efficiency (mg/C), resistance of coated film (Ω) and visual appearance of the electrodeposition coated film were evaluated. As for the visual appearance, when seeds, craters and the like were not observed, the evaluation was "○", whereas when seeds, craters and the like were observed, the evaluation was "×".

In addition to this, at the standing periods of 7 days and 14 days, the mass of bacteria included in the electrodeposition coating composition was directly measured. More specifically, about 5 g of electrodeposition coating composition was picked up from the electrodeposition bath, and this was applied on an agar medium in a Petri dish having a diameter of 90 mm and a depth of 15 mm, incubated at 28°C for 24 hours, and the number of colonies on the medium was counted. The results are shown in Table 1.

### Comparative example 1

An electrodeposition coating composition was prepared according to the same manner as in Example 1 except that instead of 50% aqueous solution of MIT, 0.23 g of 10% aqueous solution of silver nitrate was used, and it was evaluated. The results are shown in Table 2. In this coating composition, silver ion concentration was 5 ppm.

### Comparative example 2

An electrodeposition coating composition was prepared according to the same manner as in Example 1 except that 50% aqueous solution of MIT was not added, and it was evaluated. The results are shown in Table 1.

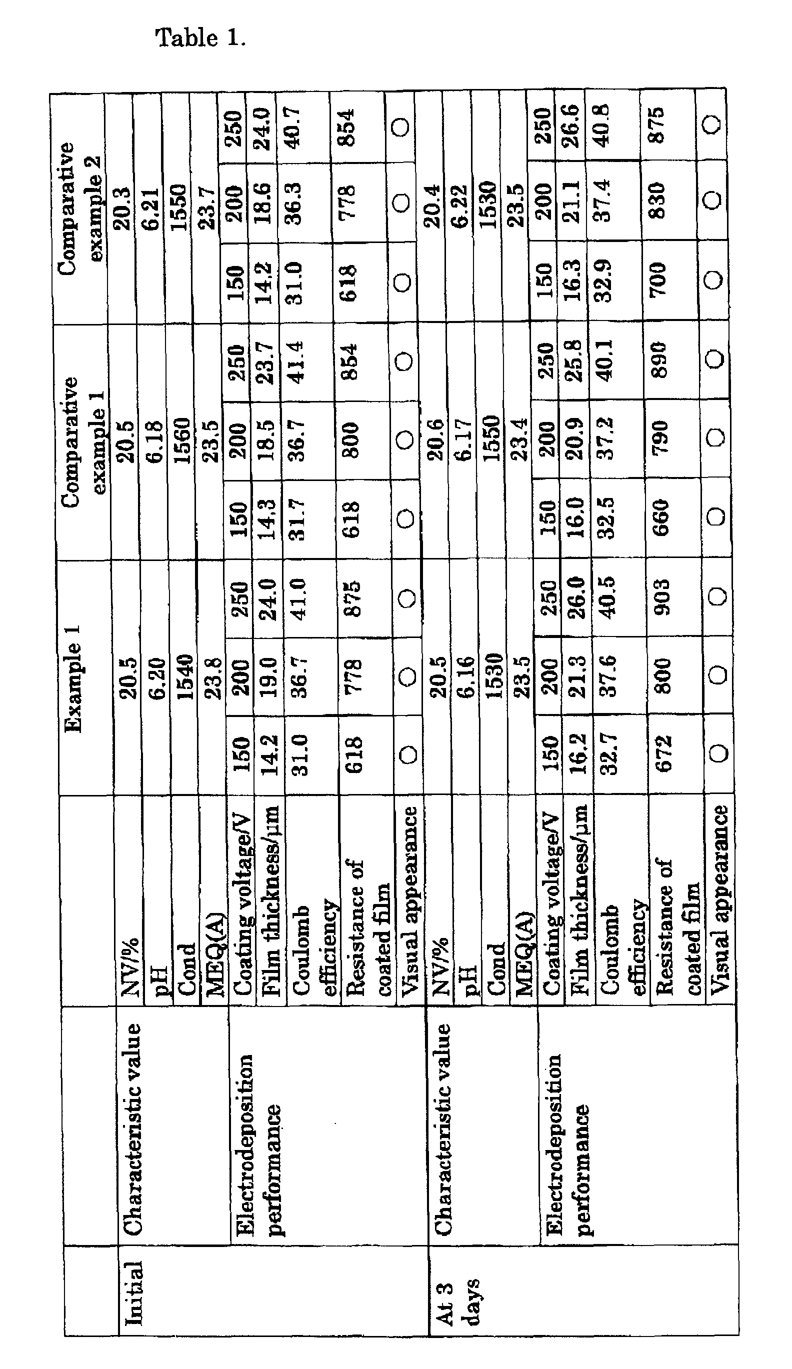

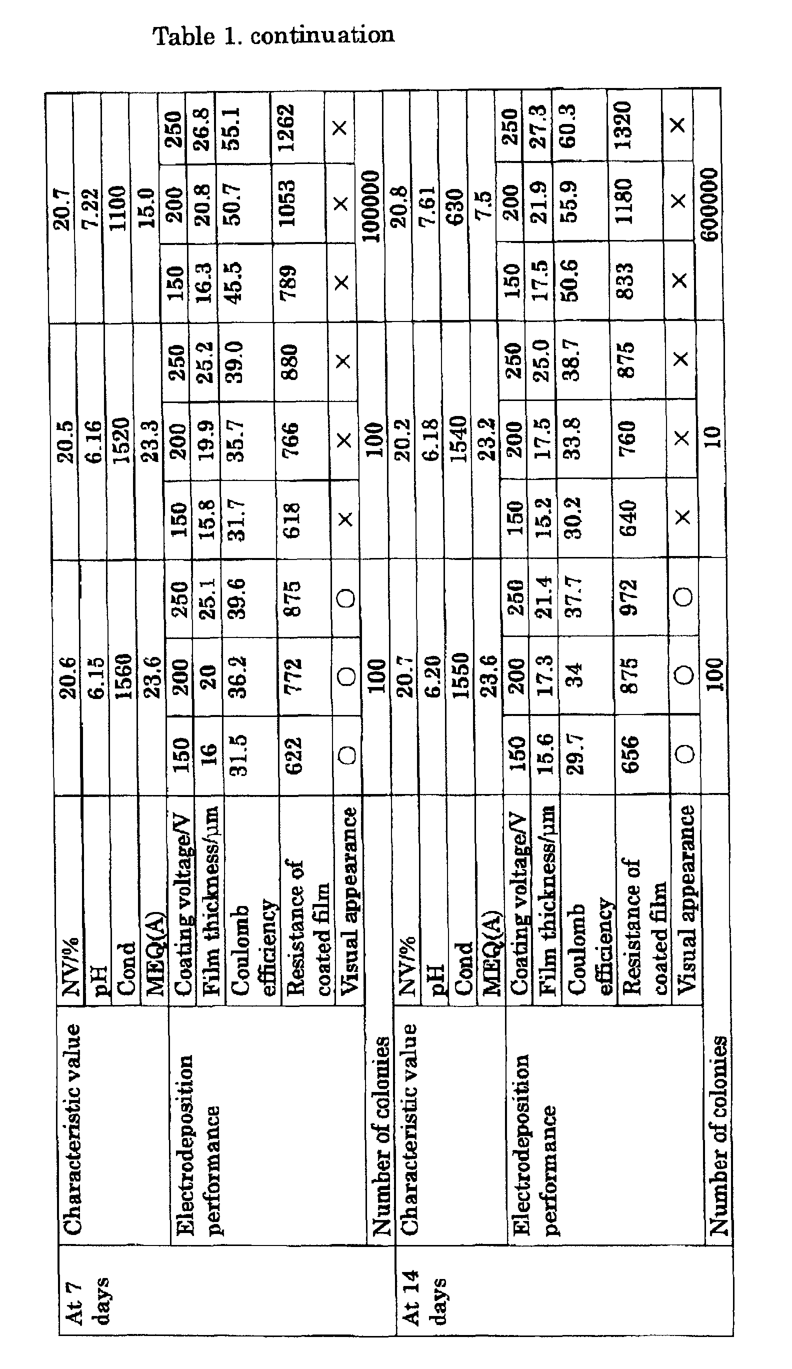

### Reference example

### Preparation of conventional lead-containing electrodeposition coating composition

The pigment dispersed resin obtained in Production example 3 was added with a pigment as shown below and ground with a sand mill, to prepare a pigment dispersed paste.

**Table 2.**

| Composition | g |
|---|---|
| Pigment dispersed resin (nonvolatile content 35%) | 71.42 |
| Aluminum silicate | 30 |
| Titanium dioxide | 61 |
| Basic lead silicate | 6 |
| Carbon black | 3 |
| Ion-exchanged water | 30.17 |

145.11 g of ion-exchanged water and 5.04 g of acetic acid were weighed. To this, a mixture of 320.11 g (75.0 g as solid) of amine modified epoxy resin of Production example 1 that had been heated to 70 ° C and 109.38 g (25.0 g as solid) of a curing agent was gradually added dropwise and uniformly dispersed by stirring. Thereafter, ion-exchanged water was added so that the solid content was 36%.

Next, to this emulsion was added 201.61 g (nonvolatile content 62%) of the above pigment dispersed paste for coloring, and then 10 g of ethylene glycol monohexyl ether which is a hydrophilic organic solvent and deionized water were added, to obtain an electrodeposition coating composition having a nonvolatile content of 20%. VOC in this coating composition was 2.5%.

The electrodeposition coating composition thus obtained was evaluated in the same manner as in Example 1. The results are shown in Table 3.

**Table 3.**

| | | | Reference example | | |
|---|---|---|---|---|---|
| Initial | Characteristic value | NV/% | 20.5 | | |
| | | pH | 6.20 | | |
| | | Cond | 1550 | | |
| | | MEQ(A) | 24.8 | | |
| | Electrodeposition performance | Coating voltage/V | 150 | 200 | 250 |
| | | Film thickness/µm | 14.3 | 18.7 | 23.5 |
| | | Coulomb efficiency | 31.1 | 35.8 | 38.7 |
| | | Resistance of coated film | 620 | 800 | 920 |
| | | Visual appearance | ○ | ○ | ○ |
| At 3 days | Characteristic value | NV/% | 20.2 | | |
| | | pH | 6.18 | | |
| | | Cond | 1520 | | |
| | | MEQ(A) | 24.5 | | |
| | Electrodeposition performance | Coating voltage/V | 150 | 200 | 250 |
| | | Film thickness/µm | 14.6 | 19.0 | 23.8 |
| | | Coulomb efficiency | 30.9 | 35.5 | 39.0 |
| | | Resistance of coated film | 630 | 820 | 900 |
| | | Visual appearance | ○ | ○ | ○ |
| At 7 days | Characteristic value | NV/% | 20.2 | | |
| | | pH | 6.22 | | |
| | | Cond | 1560 | | |
| | | MEQ(A) | 24.6 | | |
| | Electrodeposition performance | Coating voltage/V | 150 | 200 | 250 |
| | | Film thickness/µm | 14.8 | 19.1 | 24.0 |
| | | Coulomb efficiency | 31.2 | 35.7 | 39.3 |
| | | Resistance of coated film | 615 | 805 | 895 |
| | | Visual appearance | ○ | ○ | ○ |
| | Number of colonies | | 100 | | |
| At 14 days | Characteristic value | NV/% | 20.3 | | |
| | | pH | 6.17 | | |
| | | Cond | 1540 | | |
| | | MEQ(A) | 24.5 | | |
| | Electrodeposition performance | Coating voltage/V | 150 | 200 | 250 |
| | | Film thickness/µm | 15.0 | 18.8 | 23.7 |
| | | Coulomb efficiency | 30.8 | 35.5 | 38.7 |
| | | Resistance of coated film | 600 | 830 | 910 |
| | | Visual appearance | ○ | ○ | ○ |
| | Number of colonies | | 100 | | |

From these results, it is confirmed that the electrodeposition coating composition according to the present invention is in the same level in antibacterial ability as the electrodeposition coating composition before reducing contents of organic solvent and lead ion, while having an excellent stability in electrodeposition performance with elapsing time.

## Claims

1. An antibacterial lead-free cationic electrodeposition coating composition comprising an aqueous medium, a binder resin including a cationic epoxy resin and a blocked isocyanate curing agent which is dispersed or dissolved in the aqueous medium, a neutralizing acid for neutralizing the cationic epoxy resin, an organic solvent and an antibacterial agent,
wherein a volatile organic content is not more than 2% by weight, and the antibacterial agent is an isothiazolone compound.

2. The cationic electrodeposition coating composition according to claim 1, wherein said isothiazolone compound is chloromethyl isothiazolone, methyl isothiazolone, octyl isothiazolone or a mixture of two or more kinds of these.

3. The cationic electrodeposition coating composition according to claim 1, wherein said isothiazolone compound is comprised in an amount of 2 to 100 ppm.

4. The cationic electrodeposition coating composition according to claim 1, wherein hydrophilic organic solvent having antibacterial activity is comprised in an amount of not more than 1% by weight.

5. The cationic electrodeposition coating composition according to claim 1, wherein said neutralizing acid is one or more kind selected from the group consisting of acetic acid, lactic acid, formic acid and sulfamic acid.

6. The cationic electrodeposition coating composition according to claim 1, wherein a pigment is further comprised in an amount to that the weight ratio of pigment to resin solid contained in the coating composition is in the range of 1/80 to 1/1.

7. An antibacterial agent comprising an isothiazolone compound, wherein the antibacterial agent is used for preventing microorganisms from breeding in a lead-free electrodeposition coating composition having a volatile organic content of not more than 2% by weight.

8. The antibacterial agent according to claim 7, wherein said isothiazolone compound is chloromethyl isothiazolone, methyl isothiazolone, octyl isothiazolone or a mixture of two or more kinds of these.

9. The antibacterial agent according to claim 8, wherein said isothiazolone compound is used in an amout of 2 to 100 ppm in the lead-free electrodeposition coating composition.

10. Use of an isochiazolone compound for preventing microorganisms from breeding in a lead-free electrodeposition coating composition having a volatile organic content of not more than 2% by weight.

11. The use according to claim 10, wherein said isothiazolone compound is chloromethyl isothiazolone, methyl isothiazolone, octyl isothiazolone or a mixture of two or more kinds of these.

12. The use according to claim 11, wherein the amount of the isothiazolone compound is 2 to 100 ppm in the lead-free electrodeposition coating composition.
